# EUROPEAN PATENT APPLICATION

(11) **EP 4 850 510 A2**
(43) Date of publication of application: **09.12.2026**
(21) Application number: 26214484.3
(22) Date of filing: 23.05.2022
(51) Int. Cl.: A01B 15/06, A01B 23/02, A01B 35/22

(54) **WING SHARE, TOOL FOR AGRICULTURAL IMPLEMENT AND AGRICULTURAL IMPLEMENT COMPRISING SUCH TOOL**

(30) Priority: 26.05.2021 SE 2150666
(62) Document number(s) of the earlier application(s) in accordance with Art. 76 EPC: 22737669.6 / 4 346 362
(71) Applicant: Väderstad Holding AB, 595 21 Mjölby (SE)
(72) Inventor: TARLAND, Mikael, 595 97 Mantorp (SE); NILSSON, Johan, 595 41 Mjölby (SE)
(74) Representative: AWA Sweden AB

(57) **Abstract**

A wing share (122, 122a, 122b) for soil cultivation and/or weed removal comprises a fastening portion (1221) with a first substantially plane extent, and a wing portion (1222) with a second substantially plane extent. Said first and second plane extents have a mutual angle of 90 degrees +/- 45 degrees, preferably +/- 30 degrees or +/- 10 degrees. The wing portion (1222) has a share edge portion (1225) which extends from a share edge (1224) facing forwards in a working direction (F), and which has a surface portion made of abrasion-resistant material. The fastening portion (1221) and the wing portion (1222) are formed as one material piece. The share edge portion (1225) is separated from the fastening portion (1221).

## Description

### Technical field

This document relates to a wing share of a type that can be integrated in or mounted on a soil-cultivating tool such as a harrow tine, a cultivator tine or a furrow opener.

### Background

It is known to provide tools, such as harrow tines, cultivator tines or furrow openers, with one or more wing shares, the purpose of the latter being to loosen soil, cut off roots of unwanted crops and/or control the working depth of the tool.

The wing share comprises a wing portion which, during use, extends substantially horizontally and which can have a share edge facing forwards in a working direction. The share edge can be provided with an abrasion-resistant material, for example in the form of a coating or an edge insert, such as hard metal. Examples of such materials may include tungsten carbide, cubic boron nitride or similar.

Some wing shares are designed with a fastening portion, which is oriented vertically during use, and with a wing portion, which is oriented horizontally during use. The wing share can be formed from a plane blank, such as sheet metal, which is cut out and bent about 90 degrees, in order to form the fastening portion and the wing portion.

An edge portion of the wing portion facing forwards in the working direction can be bevelled and provided with abrasion-resistant material, for example by being coated with a surface layer of hard metal, or by pieces of hard metal being mounted on the edge portion, for example by soldering, welding, adhesion or mechanical engagement.

During use, the wing share, which can often have a working width of 5-30 cm, is exposed to considerable forces, both in the working direction and in the vertical direction. The vertical forces have the effect of bending the wing portion upwards/downwards relative to the fastening portion. Such bending of the wing portion relative to the fastening portion can lead to the abrasion-resistant material cracking or coming loose from the edge portion, which results in increased wear and tear or complete destruction.

There is therefore a need for an improved wing share.

### Summary

It is therefore an object to make available an improved wing share, in particular a wing share whose abrasion-resistant material is less inclined to crack as a result of upward/downward bending of the wing portion.

The invention is defined by the attached independent claims. Embodiments are set forth in the dependent claims, in the description that follows and in the attached drawings.

According to a first aspect, a wing share for soil cultivation and/or weed removal is provided, comprising:
a fastening portion with a first substantially plane extent, and
a wing portion with a second substantially plane extent, said first and said second plane extents having a mutual angle of 90 degrees +/- 45 degrees, preferably +/- 30 degrees or +/- 10 degrees, the wing portion having a share edge portion, which extends from a share edge facing forwards in a working direction, and which has a surface portion made of abrasion-resistant material, and the fastening portion and the wing portion being formed as one material piece. The share edge portion is separated from the fastening portion.

Separating the share edge portion from the fastening portion reduces the risk of the abrasion-resistant material cracking as a result of the wing portions being loaded and bent relative to the fastening portion.

The fastening portion can adjoin the wing portion via a transition portion, the latter having a front edge which is offset in the working direction relative to a furthest forward point of the share edge, seen in the working direction.

The share edge portion can be offset forwards in the working direction relative to the fastening portion.

The share edge portion can be offset forwards in relation to a front portion of the fastening portion, preferably by a distance corresponding to 90-150% of a length of the share edge portion projected on the working direction.

The share edge portion can be separated from the fastening portion by a slit.

The slit can extend rearwards from the share edge, substantially along the working direction, and has a length corresponding to 90-150% of a length of the share edge portion projected on the working direction.

The fastening portion can define a first plane, and the wing portion defines a second plane, which intersects the first plane, and the wing portion is only present on one side of the first plane.

According to a second aspect, a tool for soil cultivation is provided, comprising a wing share according to what has been described above, and a tool body, which has a first portion, which is designed for fastening to the frame of an agricultural implement, and a second tip portion, which is designed to penetrate, during use, down into the soil being cultivated and to which the wing share is fastenable, for example by the fastening portion.

According to a third aspect, an agricultural implement is obtained, comprising an implement frame which supports a plurality of tools, according to what has been described above, distributed in a transverse direction.

### Brief description of the drawings

Fig. 1 shows a part of an agricultural implement 1 in the form of a cultivator having a plurality of tools 12.
Figs 2a-2b show a tool 12 which has a pair of wing shares 122a, 122b.
Fig. 3 shows a first embodiment of a wing share 122.
Fig. 4 shows a second embodiment of a wing share 122.

### Detailed description

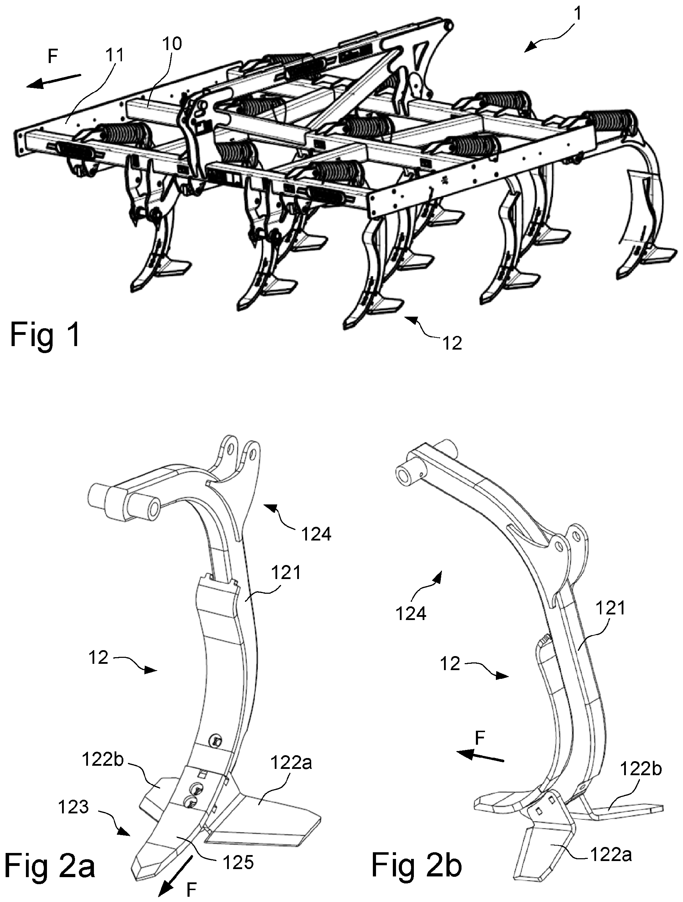

Fig. 1 shows a part of an agricultural implement 1, which comprises a frame 10, 11 on which a plurality of tools 12 are mounted.

Such an agricultural implement 1 is designed to be driven forwards in a working direction F, which can be substantially horizontal and parallel to a longitudinal centre line of the agricultural implement 1.

In the example shown, the agricultural implement 1 is a cultivator, and the tools 12 are cultivator tines.

It will be appreciated that the agricultural implement 1 can be a harrow, a seed drill or a precision seed drill, and that the agricultural implement can thus comprise two or more types of ground-engaging tools, such as levelling tines, straw harrow tines, cultivator tines, harrow tines, cultivator discs, harrow discs, furrow openers, sowing units, row units or packer rollers.

The frame can comprise two or more transverse frame portions 10, which can be in the form of beams or beam segments, preferably in the form of square beams or beams with a circular cross section.

The frame can further comprise two or more longitudinal frame portions 11, which can connect the transverse frame portions 11.

Figs 2a-2b show a tool 12 which comprises an elongate and, in the example shown, curved tool body 121. At one of its ends, the tool body 121 has a tip portion 123, and, at its other end, it has a fastening portion 124 for fastening to the frame 10, 11.

The tip portion 123 can be designed to receive a replaceable wear part 125, which can be designed with a guide rail for guiding soil upwards/forwards.

In the example shown, a pair of wing shares 122a, 122b are mounted at the tip portion 123.

The wing shares 122a, 122b can be mounted on the tool body 121 in a manner known per se, for example with fasteners, for example in the form of screw connections. Alternatively, some other form of releasable fastening arrangement can be provided.

The tip portion can have a mounting surface, at which the wing share 122, 122a, 122b is mounted with said fasteners. In normal use, the mounting surface can be oriented substantially vertically and can preferably define a vertical plane which is parallel to the working direction F.

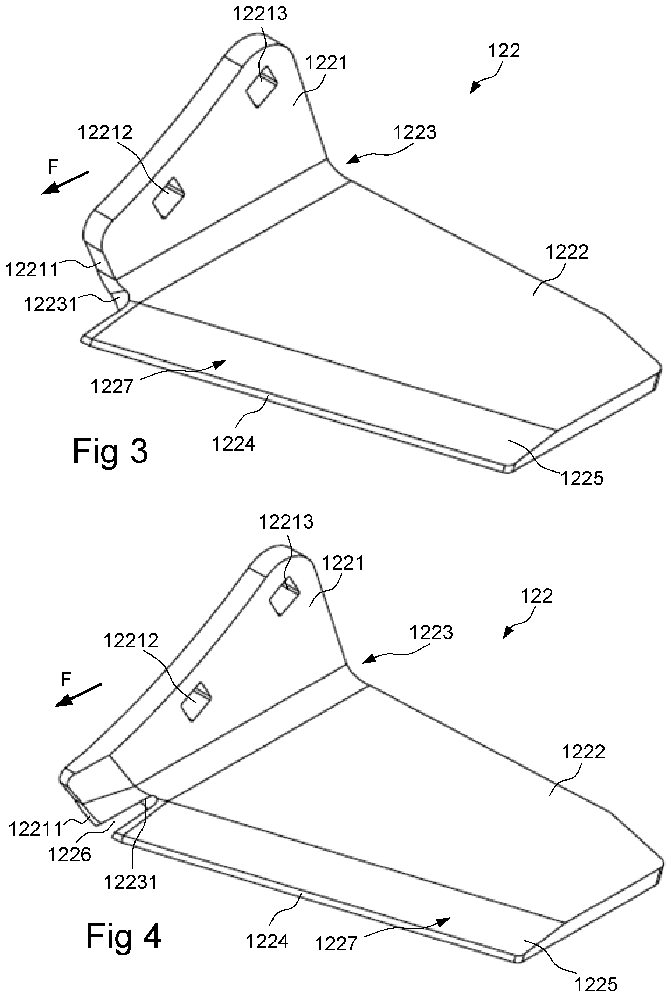

Referring to Figs 3 and 4, the wing share comprises a fastening portion 1221 and a wing portion 1222.

The fastening portion 1221 can be substantially flat and can be adapted in terms of its shape and size for mounting on the tool body 121. In such a mounted state, the fastening portion 1221 can be oriented substantially vertically, such that it defines a vertical plane.

The fastening portion 1221 can have a front portion 12211 and one or more through-holes 12212, 12213 for fastening to the tool body 121. The front portion 12211 is the part of the fastening portion that is located farthest forward, seen in the working direction F, when the wing share 122 is mounted on the tool body 121.

The wing portion 1222 can also be substantially flat and extend in a plane which, projected on a vertical plane at right angles to the working direction, is at right angles in relation to the fastening portion 1221. Alternatively, the wing portion can extend at an angle of up to +/- 45 degrees, preferably +/- 30 degrees or +/- 10 degrees relative to the vertical plane.

In some embodiments, the wing portion 1222, in the mounted state, can be oriented such that the wing portion 1222 is angled upwards, its rear edge being located higher up than its front edge, in order to lift the soil to a greater extent. Projected on the vertical plane, the wing portion 1222 can thus have an angle of 0-30 degrees, preferably 5-25 degrees, relative to the working direction F.

The wing portion 1222 has a forwardly directed share edge 1224. From the share edge 1224, a share edge portion 1225 extends rearwards along the working direction F.

The share edge 1224 and preferably also the share edge portion 1225, or at least part of the latter, can be made of or provided with abrasion-resistant material 1227 such as hard metal. For example, one or more hard-metal segments can be soldered onto the wing portion 1222, for example in a recess in the wing portion 1222. Alternatively, or in addition, the share edge and/or the share edge portion can be coated with hard metal, for example by some form of physical vapour deposition (PVD).

The share edge portion 1225 can have a thickness that decreases forwards along the working direction F.

The wing share 122 can have a transition portion 1223 between the fastening portion 1221 and the wing portion 1222. The transition portion can form a first, inner radius of curvature to the top side of the wing share, and a second, outer radius of curvature to the underside of the wing share, where the second radius of curvature is greater than the first radius of curvature.

In the wing share 122 shown in Fig. 3, the share edge portion is separated from the fastening portion by means of the fact that the front share edge 1224, in particular the part of the share edge 1224 located nearest the fastening portion 1221, is offset forwards in the working direction F relative to the fastening portion 1221.

At least part of the share edge portion 1225 is thus located in front of the front portion 12211 of the fastening portion, as seen along the working direction F.

Moreover, at least part of the share edge portion is located in front of the front part 12231 of the transition portion, as seen along the working direction F.

The offset between the fastening portion 1221 and the share edge 1224 can be of the order of 90-150% of a length of the share edge 1224 projected on the working direction F.

In the wing share 122 shown in Fig. 4, the share edge portion is separated from the fastening portion by means of the fact that the front share edge 1224, in particular the part of the share edge 1224 located nearest the fastening portion 1221, is separated from the fastening portion 1221 by a continuous slit 1226, which extends from the front portion 12211 of the fastening portion and rearwards, substantially along the working direction.

The slit 1226 can have a length of the order of 90-150% of a length of the share edge 1224 projected on the working direction F.

At least part of the share edge portion 1224 is thus located in front of the front portion 12231 of the transition portion, as seen along the working direction F.

A wing share according to what is shown in Figs 3 and 4 can be produced starting from a plane blank of sheet metal, which is cut in order to form the desired contour and is bent in order to form the transition portion 1223. The abrasion-resistant material can be applied before or after the bending, whichever is deemed advantageous.

Tools 12 with wing shares 122, 122a, 122b of the type described here can have a working width of up to about 20-40 cm, preferably about 30 cm. The wing portions 1222 of the wing shares can thus have a length, in a direction transverse to the working direction F, of up to about 8-18 cm, preferably about 13 cm.

Some specific embodiments will be set forth in the following numbered points:
Point 1. A wing share 122, 122a, 122b for soil cultivation and/or weed removal, comprising:
   a fastening portion 1221 with a first substantially plane extent, and
   a wing portion 1222 with a second substantially plane extent,
   said first and said second plane extents having a mutual angle of 90 degrees +/- 45 degrees, preferably +/- 30 degrees or +/- 10 degrees,
   the wing portion 1222 having a share edge portion 1225, which extends from a share edge 1224 facing forwards in a working direction F, and which has a surface portion made of abrasion-resistant material 1227, and
   the fastening portion 1221 and the wing portion 1222 being formed as one material piece (i.e. being formed from a single piece of material),
   wherein the share edge portion 1225 is separated from the fastening portion 1221.
Point 2. Wing share according to point 1, wherein the fastening portion 1221 adjoins the wing portion 1222 via a transition portion 1223, the latter having a front edge 12231 which is offset in the working direction relative to a furthest forward point of the share edge 1224, seen in the working direction F.
Point 3. The share edge portion 1225 is offset forwards in the working direction F relative to the fastening portion 1221.
Point 4. Wing share according to point 3, wherein the share edge portion 1225 is offset forwards in relation to a front portion 12211 of the fastening portion 1221, preferably by a distance corresponding to 90-150% of a length of the share edge portion 1225 projected on the working direction F.
Point 5. Wing share according to any of the preceding points, wherein the share edge portion 1225 is separated from the fastening portion 1221 by a slit 1226.
Point 6. Wing share according to point 5, wherein the slit 1226 extends rearwards from the share edge 1224, substantially along the working direction F, and has a length corresponding to 90-150% of a length of the share edge portion 1225 projected on the working direction F.
Point 7. Wing share according to point 6, wherein the fastening portion 1221 defines a first plane, and wherein the wing portion 1222 defines a second plane, which intersects the first plane, wherein the wing portion 1222 is only present on one side of the first plane.
Point 8. A tool 12 for soil cultivation, comprising:
   a wing share 122, 122a, 122b according to any of the preceding points, and
   a tool body 121, which has a first portion 124, which is designed for fastening to the frame of an agricultural implement, and a second tip portion 123, which is designed to penetrate, during use, down into the soil being cultivated and to which the wing share 122, 122a, 122b is fastenable.
Point 9. An agricultural implement 1 comprising an implement frame which supports a plurality of tools 12, according to point 8, distributed in a transverse direction.

## Claims

1. Wing share (122, 122a, 122b) for soil cultivation and/or weed removal, comprising:
a fastening portion (1221) with a first substantially plane extent, and
a wing portion (1222) with a second substantially plane extent,
said first and said second plane extents having a mutual angle of 90 degrees +/- 45 degrees, preferably +/- 30 degrees or +/- 10 degrees,
the wing portion (1222) having a share edge portion (1225), which extends from a share edge (1224) facing forwards in a working direction (F), and which has a surface portion made of abrasion-resistant material (1227), and
the fastening portion (1221) and the wing portion (1222) being formed from a single piece of material,
**characterized in that**
the share edge portion (1225) is separated from the fastening portion (1221), and
wherein the fastening portion (1221) adjoins the wing portion (1222) via a transition portion (1223), the latter having a front edge (12231) which is offset in the working direction relative to a furthest forward point of the share edge (1224), seen in the working direction (F).

2. Wing share according to Claim 1, wherein the share edge portion (1225) is offset forwards in the working direction (F) relative to the fastening portion (1221).

3. Wing share according to Claim 2, wherein the share edge portion (1225) is offset forwards in relation to a front portion (12211) of the fastening portion (1221), preferably by a distance corresponding to 90-150% of a length of the share edge portion (1225) projected on the working direction (F).

4. Wing share according to any of the preceding claims, wherein the share edge portion (1225) is separated from the fastening portion (1221) by a slit (1226).

5. Wing share according to Claim 4, wherein the slit (1226) extends rearwards from the share edge (1224), substantially along the working direction (F), and has a length corresponding to 90-150% of a length of the share edge portion (1225) projected on the working direction (F).

6. Wing share according to any of the preceding claims, wherein the fastening portion (1221) defines a first plane, and wherein the wing portion (1222) defines a second plane, which intersects the first plane, wherein the wing portion (1222) is only present on one side of the first plane.

7. Tool (12) for soil cultivation, comprising:
a wing share (122, 122a, 122b) according to any of the preceding claims, and
a tool body (121), which has a first portion (124), which is designed for fastening to the frame of an agricultural implement, and a second tip portion (123), which is designed to penetrate, during use, down into the soil being cultivated and to which the wing share (122, 122a, 122b) is fastenable.

8. Agricultural implement (1) comprising an implement frame which supports a plurality of tools (12), according to Claim 7, distributed in a transverse direction.
